(19) **Europäisches Patentamt / European Patent Office / Office européen des brevets**

(11) **EP 3 876 327 A1**

(12) **EUROPEAN PATENT APPLICATION**
published in accordance with Art. 153(4) EPC

(43) Date of publication:
08.09.2021 Bulletin 2021/36

(51) Int Cl.:
*H01M 10/052* (2010.01)       *H01M 10/0565* (2010.01)
*H01B 1/06* (2006.01)

(21) Application number: 19878244.3

(22) Date of filing: 29.10.2019

(86) International application number:
PCT/JP2019/042408

(87) International publication number:
WO 2020/090828 (07.05.2020 Gazette 2020/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.10.2018 JP 2018205567

(71) Applicant: Kureha Corporation
Chuo-ku
Tokyo 103-8552 (JP)

(72) Inventors:
• TAJIMA, Saori
  Tokyo 103-8552 (JP)
• WATANABE, Keisuke
  Tokyo 103-8552 (JP)
• KOBAYASHI, Shota
  Tokyo 103-8552 (JP)

(74) Representative: Zimmermann & Partner
Patentanwälte mbB
Postfach 330 920
80069 München (DE)

(54) **GEL ELECTROLYTE AND NONAQUEOUS ELECTROLYTE SECONDARY BATTERY**

(57)     The gel-like electrolyte according to an embodiment of the present invention contains a vinylidene fluoride polymer and a non-aqueous electrolyte solution. The vinylidene fluoride polymer contains a first vinylidene fluoride polymer and a second vinylidene fluoride polymer. The first vinylidene fluoride polymer is a substance that gels in gelation measurement performed by an inversion method after a solution obtained by dissolving the first vinylidene fluoride polymer in a propylene carbonate/dimethyl carbonate (1/1 mass ratio) solvent in a manner that a concentration is 10 mass% has been cooled to 25°C, and the second vinylidene fluoride polymer is a substance that does not gel in the gelation measurement.

**Description**

**TECHNICAL FIELD**

The present invention relates to a gel-like electrolyte and a non-aqueous electrolyte secondary battery.

**BACKGROUND ART**

The non-aqueous electrolyte secondary battery, such as a lithium-ion secondary battery, can achieve both high capacity and small size, and therefore has attracted attention as a power source for mobile electronic devices such as smartphones or electric vehicles. As the electrolyte solution of the non-aqueous electrolyte secondary battery, a non-aqueous electrolyte solution in which a lithium salt is dissolved in a water insoluble organic solvent is used.

In recent years, as an electrolyte solution for a non-aqueous electrolyte secondary battery, a gel-like electrolyte has been developed in which a non-aqueous electrolyte solution is impregnated into a polymer in order to, for example, suppress leakage of the non-aqueous electrolyte solution. As a polymer used in the gel-like electrolyte, a vinylidene fluoride polymer (hereinafter, the term "vinylidene fluoride polymer" includes both vinylidene fluoride homopolymers and copolymers) is preferably used due to high electrical stability.

As the gel-like electrolyte, for example, Patent Document 1 describes a polymer electrolyte containing a polymer containing a structural unit derived from vinylidene fluoride and having a melting point of 50°C or higher and a fluoropolymer that is soluble in a solvent as matrix.

Furthermore, Patent Document 2 describes a polymer electrolyte containing a vinylidene fluoride-based polymer composition containing a vinylidene fluoride copolymer (A) containing from 70 to 97 mass% of vinylidene fluoride monomer and from 3 to 30 mass% of monomer that is copolymerizable with the vinylidene fluoride and having a melt crystallization heat quantity of not lower than a certain value and a vinylidene fluoride copolymer (B) containing from 50 to 95 mass% of vinylidene fluoride monomer and from 5 to 50 mass% of monomer that is copolymerizable with the vinylidene fluoride and having a melt crystallization heat quantity of not higher than a certain value, and a non-aqueous electrolyte solution.

**CITATION LIST**

Patent Document

   Patent Document 1: JP 11-003729 A
   Patent Document 2: JP 2000-231935 A

**SUMMARY OF INVENTION**

Technical Problem

Gel-like electrolytes such as those described in Patent Documents 1 and 2 are considered to have excellent retention capability of a non-aqueous electrolyte solution. However, as further improvement of safety of batteries is demanded, capability of suppressing leakage of non-aqueous electrolyte solution, that is, further enhancement of retention capability of non-aqueous electrolyte solution has been even more demanded for a gel-like electrolyte.

The retention capability of a non-aqueous electrolyte solution becomes higher as the polymer concentration in the gel-like electrolyte is higher. However, because a polymer is an insulation component, when the polymer concentration in a gel-like electrolyte is higher, internal resistance of a battery is increased, and battery characteristics tend to be deteriorated. That is, further enhancement of retention capability of a non-aqueous electrolyte solution without increasing the polymer concentration in the gel-like electrolyte (that is, while the polymer concentration in the gel-like electrolyte is made as low as possible) has been demanded.

The present invention is completed in light of such circumstances, and an object of the present invention is to provide a gel-like electrolyte having a high retention capability of a non-aqueous electrolyte solution while the polymer concentration is not high, and a non-aqueous electrolyte secondary battery using the same.

**SOLUTION TO PROBLEM**

The gel-like electrolyte according to an embodiment of the present invention contains a vinylidene fluoride polymer and a non-aqueous electrolyte solution, the vinylidene fluoride polymer containing a first vinylidene fluoride polymer as a main component and a second vinylidene fluoride polymer,

the first vinylidene fluoride polymer being a substance that gels in gelation measurement performed by an inversion method after a solution obtained by dissolving the first vinylidene fluoride polymer in a propylene carbonate/dimethyl carbonate (1/1 mass ratio) solvent in a manner that a concentration is 10 mass% has been cooled to 25°C, and the second vinylidene fluoride polymer being a substance that does not gel in the gelation measurement.

The non-aqueous electrolyte secondary battery according to an embodiment of the present invention includes a positive electrode, a negative electrode, and the gel-like electrolyte according to an embodiment of the present invention disposed between the positive electrode and the negative electrode.

## ADVANTAGEOUS EFFECTS OF INVENTION

According to an embodiment of the present invention, a gel-like electrolyte having a high retention capability of a non-aqueous electrolyte solution while the polymer concentration is not high, and a non-aqueous electrolyte secondary battery using the same can be provided.

## DESCRIPTION OF EMBODIMENTS

As a result of diligent research, the present inventors found that combining a first vinylidene fluoride polymer that gels in gelation measurement at room temperature (25°C) performed by an inversion method and a second vinylidene fluoride polymer that does not gel (preferably, combining in a manner that the content proportion of the second vinylidene fluoride polymer is not higher than a certain proportion) can enhance retention capability of a non-aqueous electrolyte solution while adequate gelation is performed even when a total concentration of a polymer component (vinylidene fluoride polymer) is low.

This mechanism is not clear but is estimated as follows. That is, the second vinylidene fluoride polymer does not contribute to formation of a gel skeleton but exhibits excellent affinity for both the first vinylidene fluoride polymer and the non-aqueous electrolyte solution. It is conceived that, by the presence of the second vinylidene fluoride polymer, affinity of the first vinylidene fluoride polymer and the non electrolyte solution is thus indirectly enhanced, and the non-aqueous electrolyte solution tends to be retained in the gel skeleton of the first vinylidene fluoride polymer (presumed mechanism 1). Furthermore, because the second vinylidene fluoride polymer has a lower crystallinity than that of the first vinylidene fluoride polymer, the non-aqueous electrolyte solution tends to enter between aggregated molecules of the second vinylidene fluoride polymer (without contributing to the formation of the gel skeleton). It is conceived that, by this, the non-aqueous electrolyte solution tends to be retained in aggregated molecules of the second vinylidene fluoride polymer (presumed mechanism 2).

For the second vinylidene fluoride polymer (having high solubility in a solvent) that does not gel at room temperature,

the composition distribution is adequately controlled than that of the first vinylidene fluoride polymer (having low solubility in a solvent) that gels at room temperature (the amount of a component having a monomer composition having a low affinity with a solvent is small), and thus crystallinity (degree of crystallization) is low. The composition distribution and crystallinity of the vinylidene fluoride polymer can be adjusted mainly by, for example, types of monomers, copolymerization ratio, and polymerization conditions.

That is, the second vinylidene fluoride polymer having the composition distribution that is adequately controlled and having low crystallinity can be obtained by, for example, setting the content of vinylidene fluoride that tends to increase crystallinity to small (setting the content of another monomer that tends to make the crystallinity low to high) and adequately adjusting polymerization conditions. Adequately adjusting polymerization conditions specifically includes, for example, 1) addition of a monomer is performed as uniformly as possible in a continuous or batchwise manner during polymerization in a manner that the polymerization is uniform (specifically, performing in a continuous or batchwise manner to maintain the pressure at the start of the polymerization immediately after initially charging the monomer (initial pressure)) and 2) setting polymerization temperature high. More specifically, 1) refers to performing in a manner that reduction of the polymerization pressure is within 1 MPa from the start of the polymerization immediately after initially charging the monomer to the completion of addition of the rest of all monomers. Of these, at least 1) above is preferably satisfied, and both 1) and 2) above are more preferably satisfied.

Note that the polymer that is soluble in a solvent used in Examples of Patent Document 1 and the polymer B which is one of the vinylidene fluoride copolymer (B) used in Examples of Patent Document 2 undergo gelation in the gelation measurement at room temperature described above. Furthermore, because the polymer C and D are not dissolved in a propylene carbonate/dimethyl carbonate (1/1 mass ratio) solvent, the gelation test cannot be performed. In other words, it is conceived that both electrolytes of Examples of Patent Documents 1 and 2 do not contain the second vinylidene fluoride polymer of the present application.

1. Gel-like electrolyte

The gel-like electrolyte according to an embodiment of the present invention contains a vinylidene fluoride polymer and a non-aqueous electrolyte solution.

1-1. Vinylidene fluoride polymer

The vinylidene fluoride polymer contains a first vinylidene fluoride polymer as a main component and a second vinylidene fluoride polymer. Note that "as a main component" refers to being 80 mass% or greater, and preferably 90 mass% or greater, relative to the content of the vinylidene fluoride polymer (preferably the total amount of the first vinylidene fluoride polymer and the second vinylidene fluoride polymer).

First vinylidene fluoride polymer

The first vinylidene fluoride polymer is a polymer that gels in gelation measurement performed by an inversion method after a solution obtained by dissolving the polymer in a propylene carbonate/dimethyl carbonate (1/1 mass ratio) solvent in a manner that a concentration is 10 mass% has been cooled to 25°C. Such a polymer tends to form a gel skeleton (network of polymer chains), and thus the polymer can have a function of retaining a non-aqueous electrolyte solution in the gel skeleton.

The gelation measurement (inversion method) of the vinylidene fluoride polymer can be performed by the following procedure.

1) The first vinylidene fluoride polymer is added in a propylene carbonate/dimethyl carbonate (1/1 mass ratio) solvent in a manner that the concentration is 10 mass% and agitated while being heated at a temperature lower than the boiling point of the mixed solvent. This heating and agitation is performed until the vinylidene fluoride polymer is dissolved (until no insoluble matters are confirmed) while the heating temperature is increased. Confirmation of dissolution of the vinylidene fluoride polymer is performed by collecting the prepared solution in a container and measuring transparency (JIS K 0102 (2016)). Specifically, the case where no insoluble matters are present in the solution and the transparency is greater than the degree of 10 is considered to be "dissolved"; and the case where precipitation and sedimentation of insoluble matters at the bottom of the container is confirmed and the transparency is not greater than the degree of 10 is considered to be "not dissolved".

2) The solution in which the first vinylidene fluoride polymer has been dissolved in 1) above is cooled down to room temperature (25°C) and allowed to stand still at 25°C for 1 week. Thereafter, the container containing the solution is placed upside down (inversion method), and the flow condition of the content is confirmed. The case where the content does not flow is considered to be "gelled", and the case where the content flows is considered to be "not gelled". Confirmation of flow of the content is determined by visually confirming if the content started to flow from the top to the bottom of the container within 5 minutes after the container was placed upside down. Note that the case where a coarse gel-like material is visually confirmed is considered to be "gelled" even when the content moved vertically when the container was placed upside down.

The first vinylidene fluoride polymer contains a structural unit derived from vinylidene fluoride and, as necessary, may further contain a structural unit derived from another monomer other than the vinylidene fluoride. That is, the first vinylidene fluoride polymer may be a homopolymer containing a structural unit derived from vinylidene fluoride and may be a copolymer containing a structural unit derived from vinylidene fluoride and a structural unit derived from another monomer other than the vinylidene fluoride.

Regarding structural unit derived from vinylidene fluoride:

From the perspective of facilitating formation of gel by increasing crystallinity of the first vinylidene fluoride polymer, the content of the structural unit derived from vinylidene fluoride in the first vinylidene fluoride polymer is preferably from 75 to 100 mass%, more preferably from 90 to 100 mass%, and even more preferably from 95 to 100 mass%, relative to the total mass of the first vinylidene fluoride polymer. Note that, in a case where the first vinylidene fluoride polymer is a copolymer containing a structural unit derived from vinylidene fluoride and a structural unit derived from another monomer other than the vinylidene fluoride, the upper limit of the content of the structural unit derived from vinylidene fluoride may be, for example, 98.5 mass%.

The content of the structural unit derived from vinylidene fluoride in the first vinylidene fluoride polymer can be adjusted to the range described above by adjusting the proportion of vinylidene fluoride in the monomer charged as a raw material. Furthermore, the content of the structural unit derived from vinylidene fluoride in the first vinylidene fluoride polymer can be determined by a known measurement method such as nuclear magnetic resonance spectrum (NMR).

Regarding structural unit derived from another monomer other than vinylidene fluoride:

As described above, the first vinylidene fluoride polymer may further contain a structural unit derived from another monomer other than the vinylidene fluoride. One type of the structural unit derived from another monomer or two or more types of the structural units derived from other monomers may be employed.

For example, the first vinylidene fluoride polymer may have a structural unit derived from a fluorine-containing alkyl vinyl compound (hereinafter, also simply referred to as "fluorinated monomer"), other than vinylidene fluoride, which is copolymerizable with vinylidene fluoride from the perspective of controlling the crystallinity that affects the electrolyte solution retention capability. Examples of the fluorinated monomer include vinyl fluoride, trifluoroethylene, tetrafluoroethylene, chlorotrifluoroethylene, and hexafluoropropylene. Among them, from the perspective of making control of crystallinity easier, tetrafluoroethylene, chlorotrifluoroethylene, and hexafluoropropylene are preferable, and hexafluoropropylene is more preferable.

In a case where the first vinylidene fluoride polymer contains a structural unit derived from a fluorinated monomer, the content of the structural unit derived from a fluorinated monomer in the first vinylidene fluoride polymer is preferably from 1 to 20 mass%, and more preferably from 2 to 10 mass%, relative to the total mass of the first vinylidene fluoride polymer.

Furthermore, for example, in a case where the gel-like electrolyte contains an inorganic filler, the first vinylidene fluoride polymer may further contain a structural unit derived from an unsaturated monomer having a carboxy group from the perspective of further enhancing affinity with the inorganic filler by imparting polarity to the polymer. Examples of the unsaturated monomer having a carboxy group include (meth)acrylic acid, (meth)acrylates each having a carboxy group at a terminal, unsaturated dibasic acids, and unsaturated dibasic acid monoesters. Examples of the (meth)acrylate having a carboxy group at a terminal include 2-carboxyethyl acrylate, 2-carboxyethyl methacrylate, acryloyloxyethyl succinic acid, methacryloyloxyethyl succinic acid, acryloyloxyethyl phthalic acid, and methacryloyloxyethyl phthalic acid. The unsaturated dibasic acid is an unsaturated dicarboxylic acid or derivative thereof, and in particular, can be a compound in which two carboxy groups are bonded by a straight-chain or branched-chain unsaturated alkylene group having from 1 to 6 carbons. Examples of the unsaturated dibasic acid include maleic acid, fumaric acid, itaconic acid, and citraconic acid. The unsaturated dibasic acid monoester is a monoester compound derived from the unsaturated dibasic acid. Examples of the unsaturated dibasic acid monoester include monomethyl maleate, monoethyl maleate, monomethyl citraconate, and monoethyl citraconate.

In a case where the first vinylidene fluoride polymer contains a structural unit derived from an unsaturated monomer having a carboxy group, the content of the structural unit derived from an unsaturated monomer having a carboxy group in the first vinylidene fluoride polymer is, for example, preferably from 0.01 to 5 mass%, and more preferably from 0.05 to 2 mass%. The content of the structural unit derived from an unsaturated monomer having a carboxy group in the first vinylidene fluoride polymer can be measured by neutralization titration besides the nuclear magnetic resonance spectrum (NMR) described above. The quantitation method by the neutralization titration of carboxy group in the vinylidene fluoride polymer can be performed by, for example, using JP 5283688 B as a reference.

Furthermore, the content of the structural unit derived from an unsaturated monomer having a carboxy group in the first vinylidene fluoride polymer can be also measured by infrared absorption spectrum (IR). Specifically, measurement can be performed by a ratio of absorbance of an absorbance of an absorption band derived from C=O stretching vibration in the structural unit of an unsaturated monomer having a carboxy group appears around 1700 cm$^{-1}$ (e.g., in a case of MMM, 1740 cm$^{-1}$) (Ac=o) to an absorbance of an absorption band derived from C-H stretching vibration in the vinylidene fluoride structural unit appears at 3020 cm$^{-1}$ ($A_{C-H}$), which is $A_{C=O}/A_{C-H}$. The absorbance ratio $A_{C=O}/A_{C-H}$ is, for example, preferably from 0.01 to 3, and more preferably from 0.05 to 1.

Furthermore, the first vinylidene fluoride polymer may further contain a structural unit derived from a fluorine-containing polymerizable monomer other than the fluorine-containing alkyl vinyl compound described above, including trifluoromethyl acrylate, vinyl trifluoromethyl ether, and trifluoroethylene.

Furthermore, the first vinylidene fluoride polymer may further contain a structural unit derived from a crosslinkable monomer from the perspective of increasing networking space that can retain a non-aqueous electrolyte solution. The crosslinkable monomer may be monomers that are copolymerizable with the vinylidene fluoride and are polymerizable (crosslinkable) with each other. For example, the crosslinkable monomer is preferably a compound having two polymerizable functional groups and a divalent linking group that links the two polymerizable functional groups.

The polymerizable functional group is not particularly limited, and examples thereof include a vinyl group represented by $CF_2=CF-$, in which all hydrogen atoms are substituted with fluorine atoms, and a functional group represented by RR'C=CR"-CO- (where R, R', and R" independently represent a fluorine atom or a straight-chain or branched-chain perfluoroalkyl group having from 1 to 5 carbons) such as a (meth)acryloyl group in which all hydrogen atoms are substituted with fluorine atoms. From the perspective of high reactivity, a vinyl group in which all hydrogen atoms are substituted with fluorine atoms and a (meth)acryloyl group in which all hydrogen atoms are substituted with fluorine atoms are preferred, and a (meth)acryloyl group in which all hydrogen atoms are substituted with fluorine atoms is more preferred.

Note that, in this specification, (meth)acryloyl means "acryloyl or methacryloyl".

The number of atoms of the linking group when the polymerizable functional groups are connected at the shortest distance can be 2 or more and 10 or less, and preferably 3 or more and 8 or less, and the linking group can be, for example, a straight-chain, branched-chain, or cyclic perfluoroalkyl group.

Examples of the crosslinkable monomer include compounds represented by $CF_2=CFO-Rf_1-OCF=CF_2$ and $CF_2=CFO-Rf_2-CF=CF_2$ ($Rf_1$ represents a fluoroalkylene group having from 1 to 8 carbons which may contain an etheric oxygen atom, and $Rf_2$ represents a single bond or a fluoroalkylene group having from 1 to 8 carbons which may contain an etheric oxygen atom).

Physical properties of first vinylidene fluoride polymer

Weight average molecular weight

The weight average molecular weight of the first vinylidene fluoride polymer is not particularly limited and is preferably from 300000 to 2000000, and more preferably from 400000 to 1500000. When the weight average molecular weight is 300000 or greater, adequate gel formation tends to be achieved, and when the weight average molecular weight is 2000000 or less, for example, coatability during production of the gel-like electrolyte is less likely to be deteriorated.

The weight average molecular weight can be a value measured by a known gel permeation chromatography (GPC), calibrated with polystyrene. Specifically, the determination can be performed by measuring the weight average molecular weight of the first vinylidene fluoride polymer by subjecting an N-methyl-2-pyrrolidone (NMP) solution in which the first vinylidene fluoride polymer is dissolved in a manner that the concentration is 0.2 mass% to GPC measurement, calibrated with polystyrene.

The weight average molecular weight (Mw) of the first vinylidene fluoride polymer can be adjusted by polymerization conditions.

Solubility

The solubility of the first vinylidene fluoride polymer in a solvent is preferably low from the perspective of facilitating adequate gel formation. Specifically, for the first vinylidene fluoride polymer, the temperature at which the transparency becomes the degree of 10 or greater is preferably high, and specifically, the temperature is preferably 60°C or higher, and more preferably 80°C or higher. When the temperature is 60°C or higher, the gel-like electrolyte containing the first vinylidene fluoride polymer and the non-aqueous electrolyte can achieve superior gel strength and facilitate formation of any shapes.

The solubility can be evaluated by adding the first vinylidene fluoride copolymer in a non-aqueous electrolyte solution, sequentially heating and agitating while the heating temperature is varied, and determining the temperature at which the transparency of the polymer solution becomes the degree of 10 or higher for the first time.

Specifically, a vinylidene fluoride copolymer is added to a propylene carbonate/dimethyl carbonate (1/1 mass ratio) solvent to give a vinylidene fluoride copolymer concentration of 10 mass%, and the mixture is heated and agitated at 40°C for 30 minutes to prepare a liquid mixture. Then, the transparency of the liquid mixture is rapidly measured. The transparency can be measured according to the transparency test of JIS K 0102 (2016). A glass tube with a length of 300 mm and a diameter of 10 mm is used as measurement instrument, and the measurement is performed at room temperature.

In a case where the transparency is less than the degree of 10, the heating temperature is further increased to 50°C and further heated and agitated for 30 minutes, and then the transparency is measured again in the same conditions. In a case where the transparency is less than the degree of 10, the heating temperature is further increased to 60°C, and the procedure described above is repeated.

The operation described above is repeated until the transparency becomes the degree of 10 or higher. The upper limit of the heating temperature is the boiling point of the solvent. A higher solubility results in a lower temperature at which the transparency of the liquid mixture becomes the degree of 10 or higher for the first time.

Melting point

Ease of gel formation (low solubility in a solvent) of the first vinylidene fluoride polymer depends on, for example, crystallinity and chemical affinity with a solvent depended on the monomer composition. From the perspective of facilitating adequate gel formation by increasing crystallinity, the melting point (Tm) of the first vinylidene fluoride polymer is preferably high and, specifically, is preferably from 135 to 180°C, and more preferably from 140 to 175°C.

The melting point (Tm) can be measured by differential scanning calorimetry (DSC). That is, approximately 10 mg of a sample is collected and used as a measurement sample. DSC measurement is performed using this sample in the following conditions, and Tm can be determined from the endothermic peak temperature in the temperature increase process.

Measurement conditions

Instrument: DSC30, available from Mettler
Sample holder: Aluminum standard 40 μL
Measurement temperature range: 30 to 220°C
Temperature increase rate: 10°C/min
Nitrogen flow rate: 50 mL/min

The solubility and melting point (Tm) of the first vinylidene fluoride polymer can be adjusted by, for example, types of monomers, copolymerization ratio, and polymerization conditions. To make the solubility of the first vinylidene fluoride polymer lower (or to make the melting point (Tm) higher), for example, it is preferable to increase the content of the structural unit derived from vinylidene fluoride or to decrease the polymerization temperature.

Second vinylidene fluoride polymer

The second vinylidene fluoride polymer is a polymer that does not gel in the gelation measurement measured by the inversion method described above. The second vinylidene fluoride polymer exhibits excellent affinity for both the first vinylidene fluoride polymer and the non-aqueous electrolyte solution. Therefore, by the presence of the second vinylidene fluoride polymer, affinity of the first vinylidene fluoride polymer and the non-aqueous electrolyte solution can be thus indirectly enhanced, and retention of the non-aqueous electrolyte solution in the gel skeleton of the first vinylidene fluoride polymer can be facilitated. Furthermore, retention of the non-aqueous electrolyte solution in aggregated molecules of the second vinylidene fluoride polymer can be facilitated.

The second vinylidene fluoride polymer is preferably a copolymer containing a structural unit derived from vinylidene fluoride and a structural unit derived from another monomer other than the vinylidene fluoride.

Regarding structural unit derived from vinylidene fluoride:

From the perspective of facilitating enhancement of retention capability of the electrolyte solution by setting the crystallinity properly low, the content of the structural unit derived from vinylidene fluoride in the second vinylidene fluoride polymer is preferably from 50 to 90 mass%, more preferably from 60 to 80 mass%, and even more preferably from 70 to 80 mass%, relative to the total mass of the second vinylidene fluoride polymer. The content of the structural unit derived from vinylidene fluoride in the second vinylidene fluoride polymer is preferably less than the content of the structural unit derived from vinylidene fluoride in the first vinylidene fluoride polymer.

The adjustment method and the measurement method of the content of the structural unit derived from vinylidene fluoride in the second vinylidene fluoride polymer is the same as the adjustment method and the measurement method of the content of the structural unit derived from vinylidene fluoride in the first vinylidene fluoride polymer.

Regarding structural unit derived from another monomer other than vinylidene fluoride:

As the structural unit derived from another monomer other than the vinylidene fluoride, the same structural units as in another monomer in the first vinylidene fluoride polymer can be used. One type of the structural unit derived from another monomer or two or more types of the structural units derived from other monomers may be employed.

Among these, the second vinylidene fluoride polymer preferably contains the structural unit derived from a fluorinated monomer. From the perspective of facilitating enhancement of retention capability of the electrolyte solution by setting the crystallinity properly low, the content of the structural unit derived from another monomer other than the fluorinated monomer in the second vinylidene fluoride polymer is preferably from 2 to 45 mass%, more preferably from 10 to 35 mass%, and even more preferably from 15 to 25 mass%, relative to the total mass of the second vinylidene fluoride polymer. The content of the structural unit derived from another monomer other than the fluorinated monomer in the second vinylidene fluoride polymer is preferably greater than the content of the structural unit derived from another monomer other than the fluorinated monomer in the first vinylidene fluoride polymer.

Furthermore, the second vinylidene fluoride polymer may contain a structural unit derived from an unsaturated monomer having a carboxy group. The content of the structural unit derived from an unsaturated monomer having a carboxy group in the second vinylidene fluoride polymer is similar to that described above and, for example, is preferably from 0.01 to 2 mass%, more preferably from 0.01 to 1 mass%, and even more preferably from 0.01 to 0.1 mass%.

Physical properties of second vinylidene fluoride polymer

Weight average molecular weight

The weight average molecular weight of the second vinylidene fluoride polymer is preferably lower than the weight average molecular weight of the first vinylidene fluoride polymer from the perspective of making it difficult to gel in the gelation measurement described above. Specifically, the weight average molecular weight of the second vinylidene fluoride polymer is not particularly limited and is preferably from 300000 to 1500000, and more preferably from 350000 to 1000000. When the weight average molecular weight is 300000 or greater, the electrolyte solution tends to be retained, and when the weight average molecular weight is 1500000 or less, for example, coatability during production of the gel-like electrolyte is less likely to be deteriorated.

Solubility

The solubility of the second vinylidene fluoride polymer in a solvent is preferably higher than the solubility of the first vinylidene fluoride polymer in the solvent. Specifically, for the second vinylidene fluoride polymer, the temperature at which the transparency of a liquid mixture becomes the degree of 10 or higher for the first time, the liquid mixture being prepared by adding a vinylidene fluoride copolymer in an amount that makes the concentration 10 mass% to a propylene carbonate/dimethyl carbonate (1/1 mass ratio) solvent and heating and agitating while the heating temperature is increased sequentially from 40°C, is preferably lower than that of a liquid mixture prepared by adding the first vinylidene fluoride polymer and, specifically, is preferably 50°C or lower, and more preferably 40°C or lower. When the temperature is 50°C or lower, further enhancement of retention capability of the non-aqueous electrolyte solution of the gel-like electrolyte containing the second vinylidene fluoride polymer is facilitated, and when the temperature is 40°C or lower, the dissolution process is easily performed, which are more preferred.

Melting point

Ease of dissolution of the second vinylidene fluoride polymer in a solvent depends on, for example, crystallinity and chemical affinity with a solvent depended on the monomer composition. From the perspective of facilitating enhancement of solubility in a solvent by properly lowering the crystallinity, the melting point (Tm) of the second vinylidene fluoride polymer is preferably low (in particular, lower than the melting point (Tm) of the first vinylidene fluoride polymer) and, specifically, preferably from 75 to 130°C, and more preferably from 90 to 125°C. The melting point (Tm) can be measured by the same method as that described above.
To make the solubility of the second vinylidene fluoride polymer higher (or to make the melting point (Tm) lower), for example, it is preferable to decrease the content of the structural unit derived from vinylidene fluoride or to increase the polymerization temperature.

Method of producing vinylidene fluoride polymer

The vinylidene fluoride polymers such as the first vinylidene fluoride polymer and the second vinylidene fluoride polymer can be synthesized by polymerizing (as necessary, copolymerizing) vinylidene fluoride and another monomer as necessary by a known polymerization method such as an emulsion polymerization method or a suspension polymerization method.

Emulsion polymerization method

In the emulsion polymerization method, to a liquid mixture obtained by mixing a liquid medium to which each of the monomers described above is hardly soluble, the monomers described above, and an emulsifier, a polymerization initiator that is soluble in the liquid medium is further added to polymerize the monomer.
The liquid medium is only required to be a liquid medium to which each of the monomers described above is hardly soluble. Since each of the monomers described above is hardly soluble in water, the liquid medium is preferably water.
The emulsifier may be any one that can form a micelle of each of the monomers in the liquid medium, and can stably disperse a polymer synthesized by an emulsion polymerization method in the liquid medium, and it can be appropriately selected from known surfactants and used. The emulsifier is only required to be a surfactant typically used in the synthesis of a vinylidene fluoride polymer and can be, for example, a perfluorinated surfactant, a partially fluorinated surfactant, and a non-fluorinated surfactant. Among the surfactants, perfluoroalkyl sulfonic acid and a salt thereof, perfluoroalkyl carboxylic acid and a salt thereof, and a fluorine-based surfactant having a fluorocarbon chain or a fluoropolyether chain are preferable, and perfluoroalkyl carboxylic acid and a salt thereof are more preferable.

The polymerization initiator is a polymerization initiator that is soluble in the liquid medium and can be, for example, a water-soluble peroxide, a water-soluble azo-based compound, or a redox initiator system. Examples of the water-soluble peroxide include ammonium persulfate and potassium persulfate. Examples of the water-soluble azo compound include 2,2'-azobisisobutyronitrile (AIBN) and 2,2'-azobis-2-methylbutyronitrile (AMBN). Examples of the redox initiator system include ascorbic acid-hydrogen peroxide. Among them, the polymerization initiator is preferably a water-soluble peroxide.

Note that the emulsion polymerization method may be a soap-free emulsion polymerization method or a mini-emulsion polymerization method.

In the soap-free emulsion polymerization method, it is preferable to use, as the emulsifier, a reactive emulsifier, which is a substance having a polymerizable double bond in the molecule and acting as an emulsifier. The reactive emulsifier forms the micelles in the system at the beginning of the polymerization; however, as the polymerization proceeds, the reactive emulsifier is used as a monomer in the polymerization reaction and consumed, and thus it hardly exists in a free state in the finally obtained reaction system. Therefore, the reactive emulsifier is unlikely to bleed out to the particle surface of the obtained polymer.

Examples of the reactive emulsifier include polyoxyalkylene alkenyl ether, sodium alkyl allyl sulfosuccinate, methacryloyloxy polyoxypropylene sodium sulfate, and alkoxy polyethylene glycol methacrylate.

In addition, in a case where the monomers are dispersed in the liquid medium without a reactive emulsifier, the soap-free polymerization can be carried out without using a reactive emulsifier.

In the mini-emulsion polymerization method, a strong shearing force is applied using an ultrasonic oscillator or the like to miniaturize the micelles to a submicron size, and then polymerization is performed. At this time, a known hydrophobe is added to the mixed solution to stabilize the micronized micelles. In the mini-emulsion polymerization method, typically, a polymerization reaction occurs only inside each of the micelles, and each of the micelles becomes fine particles of the polymer, so that it is easy to control the particle size and particle size distribution of the obtained fine particles of the polymer.

Suspension polymerization method

In the suspension polymerization method, a monomer dispersion obtained by dissolving an oil-soluble polymerization initiator in each of the monomers is heated while being mechanically stirred in water containing a suspending agent, a chain transfer agent, a stabilizer, and a dispersant, and therefore, a polymerization reaction is caused in the droplets of the suspended monomer while the monomer is suspended and dispersed. In the suspension polymerization method, typically, a polymerization reaction occurs only inside each of the droplets of the monomers, and each of the droplets of the monomers becomes fine particles of the polymer, and thus it is easy to control the particle size and particle size distribution of the obtained fine particles of the polymer.

Examples of the polymerization initiator include diisopropyl peroxydicarbonate, dinormal propyl peroxydicarbonate, di-normal heptafluoropropyl peroxydicarbonate, diisopropyl peroxydicarbonate, isobutyryl peroxide, di(chlorofluoroacyl)peroxide, di(perfluoroacyl)peroxide, and t-butyl peroxypivalate.

Examples of the suspending agent include methylcellulose, hydroxyethyl cellulose, hydroxypropyl cellulose, hydroxypropyl methylcellulose, partially saponified polyvinyl acetate, and an acrylic acid-based polymer.

Examples of the chain transfer agent include ethyl acetate, methyl acetate, diethyl carbonate, acetone, ethanol, n-propanol, acetaldehyde, propyl aldehyde, ethyl propionate, and carbon tetrachloride.

In particular, to obtain the second vinylidene fluoride polymer, the polymerization conditions, such as the addition timing of the monomer, polymerization temperature, and polymerization pressure during the polymerization, are preferably changed from those of the first vinylidene fluoride polymer. Specifically, to obtain the second vinylidene fluoride polymer, during the polymerization, it is preferable to 1) perform addition of the monomer as uniformly as possible in a continuous or batchwise manner during polymerization in a manner that the polymerization is uniform and 2) set the polymerization temperature high.

As 1) above, it is preferable to perform addition of the monomer in a continuous or batchwise manner for multiple times rather than perform addition of the monomer in a batch manner, specifically perform addition of the monomer in a continuous or batchwise manner for multiple times in a manner that the polymerization pressure at the beginning of the polymerization (initial pressure) is maintained. Specifically, it is preferable to perform in a manner that reduction of the polymerization pressure is within 1 MPa from the start of the polymerization to the completion of addition of the rest of all monomers.

The total amount of the monomers that are added later is preferably greater than the monomer amount that is initially added, and for example, the monomer amount that is initially added/the total monomer amount that is added later may be from 5/95 to 45/55 (mass ratio).

Furthermore, adjustment of the content ratio of comonomers (such as HFP) of the monomers added later taking the reaction ratio into consideration may be an effective means to further appropriately control composition distribution and crystallinity of the obtained polymer. Furthermore, the content ratio of the comonomer in the monomers that are added later in the polymerization of the second vinylidene fluoride polymer may be higher than that of the first vinylidene fluoride polymer.

As 2) above, setting the polymerization temperature high, such as from 40 to 100°C, is preferred. Furthermore, the polymerization temperature during the polymerization of the second vinylidene fluoride polymer is preferably at least 10°C higher than the polymerization temperature during the polymerization of the first vinylidene fluoride polymer.

Of these, 1) above is preferably satisfied, and both 1) and 2) above are more preferably satisfied.

Common matters

The mixing ratio of the first vinylidene fluoride polymer and the second vinylidene fluoride polymer can be set in a manner that the retention capability of the non-aqueous electrolyte solution can be enhanced. Specifically, from the perspective of facilitating enhancement of the retention capability of the non-aqueous electrolyte solution, the content of the second vinylidene fluoride polymer is preferably from 0.1 to 20 mass%, and more preferably from 0.1 to 10 mass%, relative to the total mass of the vinylidene fluoride polymer (preferably the total amount of the first vinylidene fluoride polymer and the second vinylidene fluoride polymer).

The content of the vinylidene fluoride polymer in the gel-like electrolyte is preferably from 0.1 mass% to 30 mass%, more preferably from 0.5 mass% to 20 mass%, and even more preferably 1.0 mass% or greater and less than 10 mass%, relative to the total amount of the vinylidene fluoride polymer and the non-aqueous electrolyte solution. When the content of the vinylidene fluoride polymer is 0.1 mass% or greater, enhancement of retention capability of the non-aqueous electrolyte solution is facilitated, and when the content is 30 mass% or less, battery characteristics are less likely to be deteriorated due to the small amount of the polymer component which is an insulation component in the gel-like electrolyte. The gel-like electrolyte according to an embodiment of the present invention can achieve high retention capability of the non-aqueous electrolyte solution by combining the first vinylidene fluoride polymer and the second vinylidene fluoride polymer even without increasing the total content of the vinylidene fluoride polymer.

1-2. Non-aqueous electrolyte solution

The non-aqueous electrolyte solution is an electrolyte solution obtained by dissolving an electrolyte containing lithium atoms or sodium atoms in a non-aqueous solvent. These electrolytes may be used alone or in combination of two or more types.

Examples of the electrolyte containing lithium atoms include known lithium salts such as $LiPF_6$, $LiAsF_6$, $LiClO_4$, $LiBF_4$, $LiCl$, $LiBr$, $LiCH_3SO_3$, $LiCF_3SO_3$, $LiN(CF_3SO_2)_2$, and $LiC(CF_3SO_2)_3$. Among them, $LiPF_6$, $LiAsF_6$, $LiClO_4$, $LiBF_4$, $LiCH_3SO_3$, $LiCF_3SO_3$, $LiN(CF_3SO_2)_2$, and $LiC(CF_3SO_2)_3$ are more preferable. The concentration of the lithium salt in the non-aqueous electrolyte solution is preferably from 0.1 to 5 mol/dm$^3$, and more preferably from 0.5 to 2 mol/dm$^3$.

Examples of the electrolyte containing sodium atoms include $NaPF_6$ and NaTFSA.

Examples of the non-aqueous solvent include ethylene carbonate, propylene carbonate, dimethyl carbonate, ethyl methyl carbonate, diethyl carbonate, dipropyl carbonate, methyl propyl carbonate, ethyl propyl carbonate, ethyl butyl carbonate, γ-butyrolactone, 1,2-dimethoxyethane, 1,2-diethoxyethane, methyl propionate, and ethyl propionate. These non-aqueous solvents may be used alone or in combination of two or more types. Among them, propylene carbonate, ethylene carbonate, dimethyl carbonate, diethyl carbonate, and ethyl methyl carbonate are preferred from the perspective of enhancing battery performance.

1-3. Other components

The gel-like electrolyte may further contain another component other than the vinylidene fluoride polymer and the non-aqueous electrolyte solution in a range that does not impair the effect according to an embodiment of the present invention and battery characteristics. Examples of another component include inorganic fillers.

The inorganic filler can further enhance retention capability of the non-aqueous electrolyte solution due to interaction with the vinylidene fluoride polymer having a carboxy group in addition to imparting mechanical strength and heat resistance to the gel-like electrolyte.

Examples of the inorganic filler include oxides such as silicon dioxide ($SiO_2$), alumina ($Al_2O_3$), titanium dioxide ($TiO_2$), calcium oxide (CaO), strontium oxide (SrO), barium oxide (BaO), magnesium oxide (MgO), zinc oxide (ZnO), and barium titanate ($BaTiO_3$); hydroxides such as magnesium hydroxide ($Mg(OH)_2$), calcium hydroxide ($Ca(OH)_2$), zinc hydroxide ($Zn(OH)_2$), and aluminum hydroxide ($Al(OH)_3$); carbonates such as calcium carbonate ($CaCO_3$); sulfates such as barium sulfate; nitrides; and clay minerals. The inorganic filler may be used alone, or may be used as a combination of two or more types. Among these, from the perspectives of safety of battery and coating liquid stability, alumina, silicon dioxide, magnesium oxide, and zinc oxide are preferred.

The average particle size of the inorganic fillers is preferably from 5 nm to 2 μm, and more preferably from 10 nm to 1 μm.

The content of the inorganic filler is preferably from 1 to 50 mass%, more preferably from 1 to 20 mass%, and even more preferably from 1 to 10 mass%, relative to the amount of the gel-like electrolyte. When the content of the inorganic filler is 1 mass% or greater, retention capability of the non-aqueous electrolyte solution tends to be enhanced because interaction with the vinylidene fluoride polymer having a carboxy group tends to occur in a case where the vinylidene fluoride polymer contains the carboxy group, in addition to facilitating imparting strength to the gel-like electrolyte. When the content of the inorganic filler is 50 mass% or less, deterioration of battery characteristics due to an excessively large amount of the inorganic filler, which is an insulation component, tends to be suppressed.

The gel-like electrolyte according to an embodiment of the present invention contains, as a vinylidene fluoride polymer, a first vinylidene fluoride polymer that contributes to gel formation and a second vinylidene fluoride polymer that does not contribute to gel formation but enhances affinity of a non-aqueous electrolyte solution and the first vinylidene fluoride polymer. By this, retention capability of the non-aqueous electrolyte solution can be enhanced without increasing the total content of the vinylidene fluoride polymer.

2. Method of producing gel-like electrolyte

The gel-like electrolyte can be produced by mixing a vinylidene fluoride polymer containing a first vinylidene fluoride polymer and a second vinylidene fluoride polymer and a non-aqueous electrolyte solution and then forming the mixture into a shape of a gel-like electrolyte.

The mixing is preferably performed under heating from the perspective of enhancing solubility of the vinylidene fluoride polymer in the non-aqueous electrolyte solution. The heating temperature is preferably from 40 to 150°C.

The amount of the vinylidene fluoride polymer that is mixed is preferably from 0.1 to 30 mass%, more preferably from 0.5 to 20 mass%, and even more preferably from 1.0 to 10 mass%, relative to the total amount of the vinylidene fluoride polymer and the non-aqueous electrolyte.

The amount of the non-aqueous electrolyte solution that is mixed is preferably from 70 to 99.9 mass%, more preferably from 80 to 99.5 mass%, and even more preferably from 85 to 99 mass%, relative to the total amount of the vinylidene fluoride polymer and the non-aqueous electrolyte.

From the perspective of facilitating formation into a shape of the gel-like electrolyte by increasing plasticity of the resulting liquid mixture, a plasticizer may be further added in addition to the vinylidene fluoride polymer and the non-aqueous electrolyte solution. The plasticizer is preferably an organic solvent having a high vapor pressure at a relatively low temperature. Examples of such plasticizer include tetrahydrofuran, methyl tetrahydrofuran, acetone, methyl ethyl ketone, 1,3-dioxolane, cyclohexanone, dimethyl carbonate, diethyl carbonate, and ethyl methyl carbonate. These plasticizers may be used alone or in combination of two or more types.

Note that the non-aqueous solvent that is used in the non-aqueous electrolyte solution and the vinylidene fluoride polymer may be mixed first and then the electrolyte may be added to the liquid mixture.

In the forming, the liquid mixture obtained by the mixing is introduced into a container having a shape (for example, a film shape) of the gel-like electrolyte, and the liquid mixture is preferably cooled at normal temperature to obtain a gel-like non-aqueous electrolyte (gel-like electrolyte).

Note that, when a plasticizer is mixed in addition to the vinylidene fluoride polymer and the non-aqueous electrolyte solution, a gel-like electrolyte containing the vinylidene fluoride polymer and the non-aqueous electrolyte solution can be obtained by volatilizing and removing the plasticizer at 0 to 100°C, and preferably 15 to 60°C, after the mixing.

Note that, the method of producing the gel-like electrolyte is not limited to the method described above, and a gel-like electrolyte may be obtained by forming the vinylidene fluoride polymer into a shape of the gel-like electrolyte by a known method in advance, and then adding the non-aqueous electrolyte solution to the formed vinylidene fluoride polymer and allowing the vinylidene fluoride polymer to swell.

3. Non-aqueous electrolyte secondary battery

The gel-like electrolyte can be disposed between known positive electrode and negative electrode to form a non-aqueous electrolyte secondary battery.

[Examples]

The present invention will be described in further detail below with reference to examples. The scope of the present invention is not to be construed as being limited by these examples.

1. Synthesis of vinylidene fluoride polymer

(1) Synthesis of first vinylidene fluoride polymer

Synthesis of first vinylidene fluoride polymer 1-1

In an autoclave, 258 parts by mass of water and 0.15 parts by mass of Metolose SM-100 (available from Shin-Etsu Chemical Co., Ltd.) were charged and degassed, then 0.53 parts by mass of 50 mass% diisopropyl peroxydicarbonate (IPP)-CFC 225cb solution was charged and 95 parts by mass of vinylidene fluoride (VDF), 5 parts by mass of hexafluoropropylene (HFP), and 0.5 parts by mass of monomethyl maleate (MMM) were charged, and then the temperature was increased to 29°C. Then, the temperature of 29°C was maintained. Polymerization was performed for a total of 42 hours from the start of the temperature increase.
After polymerization was completed, the polymer slurry was heat-treated at 95°C for 60 minutes. The polymer slurry was then filtered, washed with water, and further dried at 80°C for 20 hours, and thus a first vinylidene fluoride polymer 1-1, which was a particulate copolymer of VDF, HFP, and MMM, was obtained.
As a result of measuring the composition of the first vinylidene fluoride polymer 1-1 by nuclear magnetic resonance spectrum (NMR) and neutralization titration, VDF/HFP/MMM was 96/4/0.5 in terms of mass ratio.

Synthesis of first vinylidene fluoride polymer 1-2

In an autoclave, 258 parts by mass of water and 0.15 parts by mass of Metolose SM-100 (available from Shin-Etsu Chemical Co., Ltd.) were charged and degassed, then 1.4 parts by mass of 50 mass% IPP-CFC 225cb solution and 0.7 parts by mass of ethyl acetate were charged and 100 parts by mass of VDF was charged, and then the temperature was increased to 26°C. Then, the temperature of 26°C was maintained. Polymerization was performed for a total of 20 hours from the start of the temperature increase.
After polymerization was completed, the polymer slurry was heat-treated at 95°C for 60 minutes. The polymer slurry was then filtered, washed with water, and further dried at 80°C for 20 hours, and thus a first vinylidene fluoride polymer 1-2, which was a homopolymer of VDF, was obtained.

Synthesis of first vinylidene fluoride polymer 1-3

In an autoclave, 0.2 parts by mass of disodium hydrogen phosphate ($Na_2HPO_4$) and 280 parts by mass of water were charged and degassed, then 1 part by mass of ammonium perfluorooctanoate (PFOA) and 0.1 parts by mass of ethyl acetate were charged, and then 13 parts by mass of vinylidene fluoride (VDF) and 22 parts by mass of hexafluoropropylene (HFP) were further charged. After heating the mixture to 80°C under stirring, 0.1 parts by mass of ammonium persulfate (APS) was charged to initiate the polymerization. The initial pressure at this time was 3.7 MPa. Beginning at the point when the pressure in the autoclave dropped to 2.5 MPa, 65 parts by mass of VDF was added continuously so that this pressure was maintained. That is, the pressure reduction from the start of the polymerization to the completion of addition of all the monomers was 1.2 MPa. Thereafter, when the pressure dropped to 1.5 MPa, the polymerization reaction was terminated, the mixture was dried, and thus a vinylidene fluoride polymer 1-3, which was a copolymer of VDF and HFP, was obtained.
As a result of measuring the composition of the first vinylidene fluoride polymer 1-3 by NMR, VDF/HFP was 79.2/20.8 in terms of mass ratio.

Synthesis of first vinylidene fluoride polymer 1-4

In accordance with the synthesis method of Polymer Preparation Example-B of Patent Document 2, a vinylidene fluoride polymer for comparison (polymer B of Patent Document 2) was obtained. That is, in an autoclave with an internal volume of 2 liters, 1075 g of ion-exchanged water, 0.42 g of methylcellulose, 3.15 g of IPP, 336 g of vinylidene fluoride (VDF), and 84 g hexafluoropropylene (HFP) were charged, and suspension polymerization was performed at 29°C for 18 hours. After polymerization was completed, the polymer slurry was filtered, washed with water, and then dried at 80°C for 20 hours, and thus a first vinylidene fluoride polymer 1-4, which was a copolymer of VDF and HFP, was obtained.
As a result of measuring the composition of the first vinylidene fluoride polymer 1-4 by NMR, VDF/HFP was 86/14 in terms of mass ratio.

(2) Synthesis of second vinylidene fluoride polymer

Synthesis of second vinylidene fluoride polymer 2-1

In an autoclave, 0.2 parts by mass of disodium hydrogen phosphate ($Na_2HPO_4$) and 280 parts by mass of water were charged and degassed, then 1 part by mass of ammonium perfluorooctanoate (PFOA) and 0.1 parts by mass of ethyl acetate were charged, and then 13 parts by mass of vinylidene fluoride (VDF) and 22 parts by mass of hexafluoropropylene (HFP) were further charged. After heating the mixture to 80°C under stirring, 0.1 parts by mass of ammonium persulfate (APS) was charged to initiate the polymerization. The initial pressure at this time was 2.5 MPa. In a manner that the pressure in the autoclave was maintained at 2.5 MPa, 65 parts by mass of VDF was added continuously. That is, the pressure reduction from the start of the polymerization to the completion of addition of all the monomers was 0 MPa. Thereafter, when the pressure dropped to 1.5 MPa, the polymerization reaction was terminated, the mixture was dried, and thus a second vinylidene fluoride polymer 2-1, which was a copolymer of VDF and HFP, was obtained. As a result of measuring the composition of the second vinylidene fluoride polymer 2-1 by NMR, VDF/HFP was 79.6/20.4 in terms of mass ratio.

Synthesis of second vinylidene fluoride polymer 2-2

In an autoclave, 0.2 parts by mass of disodium hydrogen phosphate ($Na_2HPO_4$) and 280 parts by mass of water were charged and degassed, then 1 part by mass of ammonium perfluorooctanoate (PFOA) and 0.1 parts by mass of ethyl acetate were charged, and then 22 parts by mass of vinylidene fluoride (VDF) and 8 parts by mass of hexafluoropropylene (HFP) were further charged. After heating the mixture to 80°C under stirring, 0.1 parts by mass of ammonium persulfate (APS) was charged to initiate the polymerization. The initial pressure at this time was 2.5 MPa. In a manner that the pressure in the autoclave was maintained at 2.5 MPa, 54 parts by mass of VDF and 16 parts by mass of HFP were added continuously. That is, the pressure reduction from the start of the polymerization to the completion of addition of all the monomers was 0 MPa. Thereafter, when the pressure dropped to 1.5 MPa, the polymerization reaction was terminated, the mixture was dried, and thus a vinylidene fluoride polymer 2-2, which was a copolymer of VDF and HFP (VDF/HFP = 79.8/20.2 in terms of mass ratio), was obtained.
As a result of measuring the composition of the second vinylidene fluoride polymer 2-2 by NMR, VDF/HFP was 79.8/20.2 in terms of mass ratio.

Synthesis of second vinylidene fluoride polymer 2-3

In an autoclave, 280 parts by mass of water was charged and degassed, then 1.0 part by mass of ammonium perfluorooctanoate (PFOA) and 0.1 parts by mass of ethyl acetate were charged, and then 10 parts by mass of vinylidene fluoride (VDF) and 25 parts by mass of hexafluoropropylene (HFP) were further charged. After heating the mixture to 80°C under stirring, 0.1 parts by mass of ammonium persulfate (APS) was charged to initiate the polymerization. The initial pressure at this time was 2.5 MPa. In a manner that the pressure in the autoclave was maintained at 2.5 MPa, 65 parts by mass of VDF was added continuously. After initiating the reaction, when 50 mass% or greater of the continuously added VDF was consumed, 0.1 parts by mass of MMM was added. That is, the pressure reduction from the start of the polymerization to the completion of addition of all the monomers was 0 MPa. Thereafter, when the pressure dropped to 1.5 MPa, the polymerization reaction was terminated, the mixture was dried, and thus a vinylidene fluoride polymer 2-3, which was a copolymer of VDF, HFP, and MMM, was obtained.
Note that, when the composition of the vinylidene fluoride polymer 2-3 was measured by NMR, VDF/HFP was 76.1/23.9 in terms of mass ratio. Measurement of the MMM in terms of mass ratio could not be performed due to its amount being a minute amount. When presence of the MMM was confirmed by IR, the absorbance ratio $A_{C=O}/A_{C-H}$ was 0.10.

(3) Synthesis of another vinylidene fluoride polymer

Synthesis of vinylidene fluoride polymer 3-1

In accordance with the synthesis method of Polymer Preparation Example-C of Patent Document 2, a vinylidene fluoride polymer for comparison (polymer C of Patent Document 2) was obtained. That is, in an autoclave with an internal volume of 2 liters, 1075 g of ion-exchanged water, 0.42 g of methylcellulose, 2.52 g of IPP, 294 g of vinylidene fluoride (VDF), and 126 g hexafluoropropylene (HFP) were charged, and suspension polymerization was performed at 28°C for 27 hours. After polymerization was completed, the polymer slurry was filtered, washed with water, and then dried at 80°C for 20 hours, and thus a vinylidene fluoride polymer 3-1, which was a copolymer of VDF and HFP, was obtained. As a result of measuring the composition of the obtained vinylidene fluoride polymer 3-1 by NMR, VDF/HFP was 79/21 in terms of mass ratio.

Synthesis of vinylidene fluoride polymer 3-2

In accordance with the synthesis method of Polymer Preparation Example-D of Patent Document 2, a vinylidene fluoride polymer for comparison (polymer D of Patent Document 2) was obtained. That is, in an autoclave with an internal volume of 2 liters, 1075 g of ion-exchanged water, 0.42 g of methylcellulose, 3.78 g of IPP, 252 g of vinylidene fluoride (VDF), and 168 g hexafluoropropylene (HFP) were charged, and suspension polymerization was performed at 29°C for 42 hours. After polymerization was completed, the polymer slurry was filtered, washed with water, and then dried at 80°C for 20 hours, and thus a vinylidene fluoride polymer 3-2, which was a copolymer of VDF and HFP, was obtained. As a result of measuring the composition of the obtained vinylidene fluoride polymer 3-2 by NMR, VDF/HFP was 72/28 in terms of mass ratio.

The weight average molecular weight, melting point, gelation measurement test, and solubility when polymer is heated of the obtained first vinylidene fluoride polymers 1-1 to 1-4, the second vinylidene fluoride polymers 2-1 to 2-3, and other vinylidene fluoride polymers 3-1 and 3-2 were evaluated by the following methods.

Weight average molecular weight Mw

The weight average molecular weight of the vinylidene fluoride polymer was measured by gel permeation chromatography (GPC) using polystyrene for calibration. The measurement sample for GPC was an N-methyl-2-pyrrolidone (NMP) solution in which the obtained vinylidene fluoride polymer was dissolved in a manner that the concentration was 0.2 mass%. The measurement conditions were as follows.

Measurement conditions

Instrument: GPC-900, available from JASCO Corporation
Column: TSK-GEL GMHXL
Column temperature: 40°C
Flow rate: 1.0 mL/min

Melting point

The melting point (Tm) of the obtained vinylidene fluoride polymer was measured by differential scanning calorimetry (DSC). That is, by using a press molding machine (AYSR-5, available from Shinto Metal Industries, Ltd.), after the vinylidene fluoride polymer was preliminarily heated at 210°C for 30 seconds, a pressed sheet was prepared by holding the vinylidene fluoride polymer at a pressing pressure of 0.5 MPa for 1 minute and then a measurement sample for DSC was obtained by cutting out approximately 10 mg from the pressed sheet. Using this sample, DSC measurement was performed in the following conditions, and Tm was determined from the endothermic peak temperature in the temperature increase process.

Measurement conditions

Instrument: DSC30, available from Mettler
Sample holder: Aluminum standard 40 µL
Measurement temperature range: 30 to 220°C
Temperature increase rate: 10°C/min
Nitrogen flow rate: 50 mL/min

Gelation measurement

The gelation measurement of the vinylidene fluoride polymer was performed by the following procedure.

1) The obtained vinylidene fluoride polymer was added in a propylene carbonate/dimethyl carbonate (1/1 mass ratio) solvent in a manner that the concentration was 10 mass% and agitated while being heated at a temperature lower than the boiling point of the solvent. This heating and agitation was performed until the vinylidene fluoride polymer was dissolved (until no insoluble matters were confirmed) while the heating temperature was increased. Confirmation of dissolution of the vinylidene fluoride polymer was performed by collecting the prepared solution in a container and measuring transparency (JIS K 0102 (2016)). Specifically, the case where no insoluble matters were present in the solution and the transparency was greater than the degree of 10 was considered to be "dissolved"; and the case where precipitation and sedimentation of insoluble matters at the bottom of the container was confirmed and the transparency was not greater than the degree of 10 was considered to be "not dissolved".

2) The solution in which the vinylidene fluoride polymer had been dissolved in 1) above was cooled down to room temperature (25°C) and allowed to stand still at 25°C for 1 week. The container containing the solution was placed upside down, and the flow condition of the content was confirmed. The case where the content did not flow was considered to be "gelled", and the case where the content flowed was considered to be "not gelled".

Confirmation of flow of the content was determined by visually confirming if the content started to flow from the top to the bottom of the container within 5 minutes after the container was placed upside down. Note that the case where a coarse gel-like material was visually confirmed and, when the container was placed upside down, the gel-like material was dropped or moved vertically by the flow of the solvent was considered to be "gelled".

Solubility test

The solubility was evaluated by adding the vinylidene fluoride copolymer in a non-aqueous electrolyte solution, sequentially heating and agitating while the heating temperature was varied, and determining the temperature at which the transparency of the polymer solution became the degree of 10 or higher for the first time. Specifically, a vinylidene fluoride copolymer having a concentration of 10 mass% was added to a propylene carbonate/dimethyl carbonate (1/1 mass ratio) solvent, and the mixture was heated and agitated at 40°C for 30 minutes to prepare a liquid mixture. Then, the transparency of the liquid mixture was rapidly measured. The transparency was measured according to the transparency test of JIS K 0102 (2016). Note that a glass tube with a length of 300 mm and a diameter of 10 mm was used as measurement instrument at room temperature.

In a case where the transparency was less than the degree of 10, the heating temperature was further increased to 50°C and further heated and agitated for 30 minutes, and then the transparency was measured again in the same conditions. The transparency was measured after the operation, and in a case where the transparency was less than the degree of 10, the heating temperature was further increased to 60°C and the procedure described above was repeated. The operation described above was repeated while the heating temperature was increased by 10°C for each repeat until the transparency became the degree of 10 or higher. The upper limit of the heating temperature is the boiling point of the solvent. When the solubility of the vinylidene fluoride copolymer is low, the temperature, at which the transparency of the liquid mixture became the degree of 10 or higher for the first time is high. Specifically, the solubility was evaluated as follows based on the temperature at which the transparency became the degree of 10 or higher for the first time.

5: The temperature at which the transparency became the degree of 10 or higher for the first time was 40°C.
4: The temperature at which the transparency became the degree of 10 or higher for the first time was 50°C.
3: The temperature at which the transparency became the degree of 10 or higher for the first time was 60°C.
2: The temperature at which the transparency became the degree of 10 or higher for the first time was 70°C.
1: The temperature at which the transparency became the degree of 10 or higher for the first time was 80°C or higher.

The evaluation results for the obtained first vinylidene fluoride polymers 1-1 to 1-4, the second vinylidene fluoride polymers 2-1 to 2-3, and other vinylidene fluoride polymers 3-1 and 3-2 are shown in Table 1.

Table 1

| Vinylidene fluoride polymer | Composition | | Mw | Melting point (°C) | Presence of gelling | Solubility | Notes |
|---|---|---|---|---|---|---|---|
| 1-1 | VDF/HFP/MMM | 96/4/0.5 | 900000 | 160 | Gelled | 3 | First vinylidene fluoride polymer |
| 1-2 | PVDF | 100 | 600000 | 175 | Gelled | 1 | |
| 1-3 | VDF/HFP | 79.2/20.8 | 400000 | 140 | Gelled | 3 | |
| 1-4 | VDF/HFP | 86/14 | 600000 | 145 | Gelled | 3 | |

(continued)

| Vinylidene fluoride polymer | Composition | | Mw | Melting point (°C) | Presence of gelling | Solubility | Notes |
|---|---|---|---|---|---|---|---|
| 2-1 | VDF/HFP | 79.6/20.4 | 400000 | 120 | Not gelled | 4 | Second vinylidene fluoride polymer |
| 2-2 | VDF/HFP | 79.8/20.2 | 400000 | 100 | Not gelled | 4 | |
| 2-3 | VDF/HFP/MMM | 76.1/23.9 (MMM amount was $A_{C=O}/A_{C-H} = 0.1$ equivalent amount) | 400000 | 120 | Not gelled | 5 | |
| 3-1 | VDF/HFP | 79/21 | 500000 | 125 | - * | Not dissolved | Another vinylidene fluoride polymer |
| 3-2 | VDF/HFP | 72/28 | 250000 | 105 | - * | Not dissolved | |
| * Because dissolution was not achieved, gelation test could not be performed. | | | | | | | |

Because the vinylidene fluoride polymer 1-4 which corresponded to the polymer B of Patent Document 2 gelled, it was found that the vinylidene fluoride polymer 1-4 did not at least correspond to the second vinylidene fluoride polymer. Furthermore, because the vinylidene fluoride polymers 3-1 and 3-2 which corresponded to the polymers C and D of Patent Document 2 were not dissolved in a propylene carbonate/dimethyl carbonate (1/1 mass ratio) solvent, gelation test could not be performed, and it was found that the vinylidene fluoride polymers 3-1 and 3-2 did not correspond to any of the first vinylidene fluoride polymer or second vinylidene fluoride polymer.

2. Preparation and evaluation of gel-like electrolyte

Example 1

Preparation of non-aqueous electrolyte solution

Ethylene carbonate (EC) and propylene carbonate (PC) were mixed in a mass ratio of 3:2. In the obtained mixed solvent, lithium hexafluorophosphate (LiPF$_6$) was dissolved to form the concentration of 1 mol/L, and thus a non-aqueous electrolyte solution was prepared.

Preparation of gel-like electrolyte

In 19.8 g of the obtained non-aqueous electrolyte solution, 1.3 g of a mixture of a first vinylidene fluoride polymer 1-1 as the first vinylidene fluoride polymer and a second vinylidene fluoride polymer 2-3 as the second vinylidene fluoride polymer (1-1:2-3 = 95:5 (mass ratio)), 35.0 g of dimethyl carbonate as the plasticizer, and 1.3 g of alumina as the inorganic filler were added, and heated and agitated, and thus a polymer solution was prepared. After the obtained polymer solution was coated on a glass plate, the dimethyl carbonate was dried and removed by heating, and thus a gel-like electrolyte was obtained.

Examples 2 to 8 and Comparative Examples 1 to 5

Each gel-like electrolyte was obtained in the same manner as in Example 1 except for changing the types of the first and second vinylidene fluoride polymers and the mixing ratio of the first and second vinylidene fluoride polymers to those shown in Table 2.

Comparative Examples 6 and 7

Each gel-like electrolyte was obtained in the same manner as in Example 1 except for changing the second vinylidene fluoride polymer to another vinylidene fluoride polymer shown in Table 1.
The liquid retention rate of the gel-like electrolyte obtained in Examples 1 to 8 and Comparative Examples 1 to 7 and the difference Δ of the liquid retention rate relative to that of Comparative Example 1 were measured by the following methods.

Liquid retention rate

The obtained gel-like electrolyte was cut out into a predetermined size to make a test piece. The mass before pressure was applied was measured in an environment at 25°C (dew point - 50°C or lower) and used as "mass of test piece before pressure was applied". Then, after the pressure of 30 kPa was applied to the test piece for 20 minutes, the liquid component (non-aqueous electrolyte solution) exuded on the surface of the test piece was wiped out, and the mass of the test piece was measured in the same manner as described above and used as "mass of test piece after pressure was applied". The obtained value was substituted into the following equation to calculate the liquid retention rate (%).

$$\text{Liquid retention rate (\%)} = (\text{mass of test piece after pressure was applied}/\text{mass of test piece before pressure was applied}) \times 100$$

Difference Δ

From the perspective of exhibiting effect of improving liquid retention rate by mixing the first vinylidene fluoride polymer and the second vinylidene fluoride polymer, a difference (Δ) was calculated by subtracting the liquid retention rate of the gel-like electrolyte (Comparative Examples 1 to 3) of the first vinylidene fluoride polymer which was the main component from the liquid retention rate of the gel-like electrolyte (Examples 1 to 8) of a mixed system. Difference Δ = (liquid retention rate of gel-like electrolyte of mixed system) - (liquid retention rate of gel-like electrolyte formed only from first vinylidene fluoride polymer which was main component)

The evaluation results for Examples 1 to 8 and Comparative Examples 1 to 7 are shown in Table 2.

[Table 2]

|  | Vinylidene fluoride polymer | | | | Inorganic filler *2 (part by mass) | Liquid retention rate (%) | Difference Δ |
| --- | --- | --- | --- | --- | --- | --- | --- |
|  | First vinylidene fluoride polymer | Second vinylidene fluoride polymer | Another vinylidene fluoride polymer | Mixing ratio *1 (Mass ratio) | | | |
| Example 1 | 1-1 | 2-3 | - | 95/5 | 6.2 | 65.83 | 2.29 |
| Example 2 | 1-1 | 2-2 | - | 90/10 | 6.2 | 66.18 | 2.64 |
| Example 3 | 1-1 | 2-2 | - | 98/2 | 6.2 | 65.42 | 1.88 |
| Example 4 | 1-1 | 2-2 | - | 95/5 | 6.2 | 65.64 | 2.10 |
| Example 5 | 1-1 | 2-2 | - | 88/12 | 6.2 | 63.95 | 0.41 |
| Example 6 | 1-2 | 2-2 | - | 95/5 | 6.2 | 69.67 | 4.30 |
| Example 7 | 1-1 | 2-2 | - | 95/5 | - | 61.13 | 2.19 |
| Example 8 | 1-1 | 2-1 | - | 95/5 | 6.2 | 66.03 | 2.49 |
| Comparative Example 1 | 1-1 | - | - | - | 6.2 | 63.54 | - |
| Comparative Example 2 | 1-1 | - | - | - | - | 58.94 | - |
| Comparative Example 3 | 1-2 | - | - | - | 6.2 | 65.37 | - |
| Comparative Example 4 | 1-1/1-3 | - | - | 95/5 | 6.2 | 63.66 | 0.12 |

(continued)

| | Vinylidene fluoride polymer | | | | Inorganic filler *2 (part by mass) | Liquid retention rate (%) | Difference Δ |
|---|---|---|---|---|---|---|---|
| | First vinylidene fluoride polymer | Second vinylidene fluoride polymer | Another vinylidene fluoride polymer | Mixing ratio *1 (Mass ratio) | | | |
| Comparative Example 5 | 1-1/1-4 | - | - | 95/5 | 6.2 | 63.44 | -0.10 |
| Comparative Example 6 | 1-1 | - | 3-1 | 95/5 | 6.2 | 63.30 | -0.24 |
| Comparative Example 7 | 1-1 | - | 3-2 | 95/5 | 6.2 | 63.28 | -0.26 |
| *1: First vinylidene fluoride polymer/second vinylidene fluoride polymer (mass ratio) Note that, for Comparative Examples 4 and 5, a mixing ratio of the two types of the first vinylidene fluoride polymers is shown. For Comparative Examples 6 and 7, a mixing ratio of first vinylidene fluoride polymer/another vinylidene fluoride polymer (mass ratio) is shown. *2: Content (part by mass) relative to 100 parts by mass total of vinylidene fluoride polymer and non-aqueous electrolyte solution | | | | | | | |

As shown in Table 2, it was found that each of the gel-like electrolytes of Examples 1 to 8 which contained the first vinylidene fluoride polymer and the second vinylidene fluoride polymer had a higher liquid retention rate than those of the gel-like electrolytes of Comparative Examples 1 to 3 which only contained the first vinylidene fluoride polymer, the gel-like electrolytes of Comparative Examples 4 and 5 which contained two types of the first vinylidene fluoride polymers, and the gel-like electrolytes of Comparative Examples 6 and 7 which contained the first vinylidene fluoride polymer and another vinylidene fluoride polymer.

In particular, it was found that when the content of the structural unit derived from vinylidene fluoride in the first vinylidene fluoride polymer was high, a higher liquid retention rate was achieved (comparison of Examples 4 and 6). Furthermore, it was found that, when the solubility of the second vinylidene fluoride polymer was not excessively high, a high liquid retention rate was achieved (comparison of Examples 1, 4, and 8).

Furthermore, it was found that, when the proportion of the second vinylidene fluoride polymer mixed was 10 mass% or less, a higher liquid retention rate was achieved (comparison of Examples 2 to 4 and Example 5).

Furthermore, it was found that, when a larger amount of inorganic filler was contained, a higher liquid retention rate was achieved (comparison of Examples 4 and 7). It is conceived that, this is because the inorganic filler and the carboxy group derived from MMM contained in the first vinylidene fluoride polymer interact, and the non electrolyte solution tends to be retained between them.

This application claims the priority to JP 2018-205567, filed on October 31, 2018. The contents described in the specification of said application are all incorporated herein by reference.

[Industrial Applicability]

According to an embodiment of the present invention, a gel-like electrolyte having a high retention capability of a non-aqueous electrolyte solution while the polymer concentration is not high, and a non-aqueous electrolyte secondary battery using the same can be provided.

**Claims**

1.　A gel-like electrolyte comprising a vinylidene fluoride polymer and a non-aqueous electrolyte solution,

the vinylidene fluoride polymer containing a first vinylidene fluoride polymer as a main component and a second vinylidene fluoride polymer,
the first vinylidene fluoride polymer being a substance that gels in gelation measurement performed by an inversion method after a solution obtained by dissolving the first vinylidene fluoride polymer in a propylene carbonate/dimethyl carbonate (1/1 mass ratio) solvent in a manner that a concentration is 10 mass% has been cooled to 25°C, and

the second vinylidene fluoride polymer being a substance that does not gel in the gelation measurement.

2. The gel-like electrolyte according to claim 1, wherein
a content of the second vinylidene fluoride polymer is from 0.1 to 10 mass% relative to a total mass of the vinylidene fluoride polymer.

3. The gel-like electrolyte according to claim 1 or 2, wherein
the second vinylidene fluoride polymer is a copolymer containing a structural unit derived from vinylidene fluoride and a structural unit derived from a fluorine-based monomer other than the vinylidene fluoride.

4. The gel-like electrolyte according to any one of claims 1 to 3, wherein
at least one of the first vinylidene fluoride polymer or the second vinylidene fluoride polymer further contains a structural unit derived from an unsaturated monomer having a carboxy group.

5. The gel-like electrolyte according to any one of claims 1 to 4, wherein
a weight average molecular weight of the first vinylidene fluoride polymer is from 300000 to 2000000.

6. The gel-like electrolyte according to any one of claims 1 to 5, wherein
the non-aqueous electrolyte solution is a non-aqueous electrolyte solution in which an electrolyte is dissolved in at least one non-aqueous solvent selected from the group consisting of propylene carbonate, ethylene carbonate, dimethyl carbonate, diethyl carbonate, and methyl ethyl carbonate.

7. The gel-like electrolyte according to claim 6, wherein
the electrolyte is at least one selected from the group consisting of $LiPF_6$, $LiAsF_6$, $LiClO_4$, $LiBF_4$, $LiCl$, $LiBr$, $LiCH_3SO_3$, $LiCF_3SO_3$, $LiN(CF_3SO_2)_2$, and $LiC(CF_3SO_2)_3$.

8. The gel-like electrolyte according to any one of claims 1 to 7,
further comprising an inorganic filler.

9. A non-aqueous electrolyte secondary battery comprising:

   a positive electrode;
   a negative electrode; and
   the gel-like electrolyte according to anyone of claims 1 to 8 disposed between the positive electrode and the negative electrode.

## INTERNATIONAL SEARCH REPORT

| | International application No. |
|---|---|
| | PCT/JP2019/042408 |

**A. CLASSIFICATION OF SUBJECT MATTER**
H01M 10/052(2010.01)i; H01M 10/0565(2010.01)i; H01B 1/06(2006.01)i
FI: H01M10/0565; H01M10/052; H01B1/06 A

According to International Patent Classification (IPC) or to both national classification and IPC

**B. FIELDS SEARCHED**

Minimum documentation searched (classification system followed by classification symbols)
H01M10/052; H01M10/0565; H01B1/06

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-003729 A (ASAHI GLASS CO., LTD.) 06.01.1999 (1999-01-06) | 1-9 |
| A | JP 2000-231935 A (KUREHA CHEMICAL INDUSTRY CO., LTD.) 22.08.2000 (2000-08-22) | 1-9 |
| A | JP 2001-222988 A (TEIJIN LTD.) 17.08.2001 (2001-08-17) | 1-9 |
| A | JP 2004-303473 A (TOMOEGAWA CO., LTD.) 28.10.2004 (2004-10-28) | 1-9 |
| A | WO 2017/154448 A1 (KUREHA CORPORATION) 14.09.2017 (2017-09-14) | 1-9 |
| A | WO 2017/154449 A1 (KUREHA CORPORATION) 14.09.2017 (2017-09-14) | 1-9 |
| A | JP 2001-319690 A (HITACHI MAXELL, LTD.) 16.11.2001 (2001-11-16) | 1-9 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 January 2020 (22.01.2020) | 04 February 2020 (04.02.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/042408 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2007-141467 A (SONY CORP.) 07.06.2007 (2007-06-07) | 1-9 |

Form PCT/ISA/210 (continuation of second sheet) (January 2015)

**INTERNATIONAL SEARCH REPORT**
Information on patent family members

International application No.

PCT/JP2019/042408

| Patent Documents referred in the Report | Publication Date | Patent Family | Publication Date |
|---|---|---|---|
| JP 11-003729 A | 06 Jan. 1999 | (Family: none) | |
| JP 2000-231935 A | 22 Aug. 2000 | (Family: none) | |
| JP 2001-222988 A | 17 Aug. 2001 | (Family: none) | |
| JP 2004-3034 73 A | 28 Oct. 2004 | (Family: none) | |
| WO 2017/154448 A1 | 14 Sep. 2017 | JP 2017-160365 A KR 10-2018-0069078 A CN 1083 70066 A US 2019/0013547 A1 EP 3429017 A1 | |
| WO 2017/154449 A1 | 14 Sep. 2017 | JP 2017-165881 A KR 10-2018-0069084 A CN 108370067 A EP 3429018 Al | |
| JP 2001-319690 A | 16 Nov. 2001 | (Family: none) | |
| JP 2007-141467 A | 07 Jun. 2007 | US 2007/0111104 A1 KR 10-2007-0051706 A CN 101005146 A | |

Form PCT/ISA/210 (patent family annex) (January 2015)

**EP 3 876 327 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11003729 A
- JP 2000231935 A
- JP 5283688 B
- JP 2018205567 A